(19) Europäisches Patentamt
European Patent Office
Office européen des brevets

(11) Publication number: **0 015 538 B1**

(12) # EUROPEAN PATENT SPECIFICATION

(45) Date of publication of patent specification: **08.06.83**

(51) Int. Cl.³: **C 04 B 31/00, C 04 B 31/06, C 04 B 31/32**

(21) Application number: **80101087.7**

(22) Date of filing: **04.03.80**

(54) **A glass-fiber-reinforced cement panel and a process for its manufacture.**

(30) Priority: **06.03.79 JP 26436/79**
**28.05.79 JP 66429/79**

(43) Date of publication of application:
**17.09.80 Bulletin 80/19**

(45) Publication of the grant of the patent:
**08.06.83 Bulletin 83/23**

(84) Designated Contracting States:
**BE CH DE FR GB IT NL SE**

(56) References cited:
**FR - A - 2 312 465**
**FR - A - 2 317 250**

**CHEMICAL ABSTRACTS, vol. 88, page 371, 1978, ref 176214d Columbus, Ohio, US**

(73) Proprietor: **KUBOTA LTD.**
**2-47, Shikitsuhigashi 1-chome**
**Naniwa-ku Osaka (JP)**

(72) Inventor: **Inui, Nobuo**
**c/o Kubota Ltd.22 Funade-cho, 2-chome**
**Naniwa-ku, Osaka (JP)**
Inventor: **Teramoto, Hiroshi**
**c/o Kubota Ltd 22 Funade-cho, 2-chome**
**Naniwa-ku, Osaka (JP)**

(74) Representative: **Patentanwälte TER MEER - MÜLLER - STEINMEISTER**
**Triftstrasse 4**
**D-8000 München 22 (DE)**

**EP 0 015 538 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A glass-fiber-reinforced cement panel and a process for its manufacture

Technical field of the invention

The present invention relates to a process for manufacturing a fiber-reinforced cement panel by the Hatschek sheet-making process comprising the steps of forming a cement slurry by mixing cement, reinforcement fibers and water in a pulper, transferring the slurry to a chest, further continuously feeding the slurry from the chest to a vat, making a sheet from the cement slurry by a sheet-making cylinder in the vat, taking up the sheet on a making roll and making the panel by cutting and curing the sheet which is stripped off the making roll and the fiber-reinforced cement panels obtained therewith.

Description of the prior art:

The process for manufacturing asbestos cement panels by way of sheet-making using cement slurries prepared by adding asbestos fibers to cement has heretofore been employed, and as a representative manufacturing process, the Hatschek sheet-making process shown in the accompanying drawing is known.

According to this sheet-making process, at the pulper (1), cement, asbestos and water are mixed to produce a slurry, and this slurry is transferred to the chest (2). The slurry in the chest (2) is continuously fed to the vats (3); and the slurry in the vat is taken on the sheet-making cylinder (4) in a sheet form. Then, the sheet on the sheet-making cylinder (4) is transferred to the felt belt (5) running in contact with this cylinder (4), and the sheet on the felt belt (5) is, in turn, taken up by the making roll (6). As the sheet is taken up on this making roll to the predetermined thickness, the taken-up sheet is cut, and stripped off the making roll (6). It is, then, expanded flat, and after being passed through a press, is cured in high temperature, high pressure steam, yielding a set cement panel.

Recently, this process has encountered some problems, including scanty supply of asbestos fibers, rising costs, and in addition, problems of work-site environment where asbestos fibers are handled, involving the adverse effect on human body of asbestos fibers scattered from weathered asbestos cement panels. To overcome such difficulties, search is now going on for other fibers to replace asbestos.

FR—A—2 317 250 discloses a process for manufacturing a fiber-reinforced cement panel using the Hatschek sheet-making process, wherein an aqueous slurry is used comprising 1 to 10% by weight of glass fibers and 1 to 10% asbestos fibers or 0.03 to 5% by weight of specific fibers selected from fibers of cotton, linen, hemp, wool or silk. Chemical Abstracts, Vol. 88, page 371 (1978), ref. 176214d describes a fiber-reinforced cement comprising 1 to 10% chopped strand glass fibers and 0.1—10% beaten polyacrylic fibers and/or polyvinyl fibers. FR—A—2 312 465 discloses a process for manufacturing a fiber-reinforced cement panel using an aqueous slurry comprising cement and 0.25 to 20% by weight of glass fibers and a small proportion of auxiliary fibers not being asbestos fibers. These references do neither disclose nor make obvious the solid composition claimed herein.

Disclosure of the invention

The present inventors pursued investigations on the use of glass fibers in place of asbestos fibers. Replacement of asbestos fibers with glass fibers, however, involves various problems. The glass fibers give only slight dispersion in slurry, have smaller cement capturing capacity than asbestos fibers, and show low sheet-making ability, since with glass fibers only, the cement particles in the slurry penetrate through the sheet-making cylinder, badly affecting the sheet-making with cement solids on the sheet-making cylinder.

In order to explore a suitable manufacturing method of the glass-fiber-reinforced cement panels, the present inventors have carried out studies on the possibility of sheet-making with cement slurries containing glass fibers by conducting the following experiments:

Experiment 1

In the mixed material of glass fibers which would be opened into mono-filaments in water, pulp and cement, the mixing rate of glass fibers was widely varied over 0.1—3% by weight, and that of pulp over 0.1—10% weight. Forty liter (40 l) of water were added to 2.000 g of this mixed material. This mixture was stirred for 150 seconds, and the dispersed state of the glass fibers after the stirring was observed. The result revealed that if the amount of pulp is twice as large as the amount of glass fibers or more, the glass fibers may be adequately dispersed. It also turned out, however, that the settling and separation of glass fibers with the passage of time is appreciably rapid, giving rise to a difficulty causing the glass fibers to be dispersed in a slurry in a stable state merely by the addition of pulp.

Experiment 2

In order to achieve an improvement on the settling and separation of glass fibers, a strong anionic flocculant is added to the mixed material of the aforementioned Experiment 1; then, water was added similarly as in Experiment 1, followed by stirring, and after this stirring, the settling and separating state of the glass fibers was observed. The result suggested that if the addition of the flocculant is more than 0.005% by weight of cement, the settling and separation of the glass fibes may be adequately hindered. The reason is because the viscosity of the slurry is increased by the addition of the flocculant.

Experiment 3

The slurry after being stirred in Experiment 2 was filtered through a 60 mesh (250 $\mu$m) wire-netting, and the percentage of the cement solids in the slurry made into sheet on the wire-netting was measured.

The result evidently showed that while the sheet-making efficiency is higher than 70%, with the addition of the flocculant more than 0.005% by weight, it runs below 50% without addition of the flocculant. Thus, it has been confirmed by the above-described experiments that the problem in the dispersion of the glass fibers may be solved by the addition of pulp and a cement flocculant to the slurry, and that the problem in the sheet-making efficiency of cement solids may be eliminated by the addition of the cement flocculant above-mentioned.

That the impact resistance of the cement panel may be improved by the addition of polyvinyl alcohol fibers, together with glass fibers, into the cement slurry has hitherto been known. However, polyvinyl alcohol fibers, like glass fibers, are inferior in view of dispersion and sheet-making ability, having a smaller cement solids capturing capacity than asbestos fibers.

According to this invention, by the use of polyvinyl alcohol fibers and glass fibers in admixture, and through the addition of pulp and a certain cement flocculant, it is possible to improve the dispersion in the cement slurry and the cement capturing capacity, and to manufacture glass-fiber-reinforced cement panels having excellent impact resistance.

As the cement flocculant is added to the cement slurry, the cement particles are agglomerated, and become more easily captured by the pulp fibers and the cement fiber groups, giving rise to an improvement in the sheet-making ability. However, the effect of improving the sheet-making ability is largely dependent on in what step of the manufacturing process the flocculant is added.

Although the grounds are not certain, the agglomeration of cement particles caused by the addition of the flocculant is believed to result from the active parts of the cement particles and the active branches of the flocculant being bridged, and thereby chemically bonded. When such a cement slurry is violently stirred, the bridged molecules are severed to be turned into low molecular weight compounds.

The object of this invention is to provide a glass-fiber-reinforced cement panel having nearly equivalent strength to that of asbestos-fiber-reinforced cement panels, without employing asbestos fibers and a process for their manufacturing.

The subject matter of the present application therefore is a process for manufacturing a fiber-reinforced cement panel by the Hatschek sheet-making process comprising the steps of forming a cement slurry by mixing cement, reinforcement fibers and water in a pulper, transferring the slurry to a chest, further continuously feeding the slurry from the chest to a vat, making a sheet from the cement slurry by a sheet-making cylinder in the vat, taking up the sheet on a making roll and making the panel by cutting and curing the sheet which is stripped off the making roll which is characterized by the step of forming a cement slurry by mixing a mixture comprising 0.5—3.0% by weight of glass fibers, pulp added in an amount 2—2.5 times the amount of the aforementioned glass fibers and the balance cement, with water, the step of adding, to this cement slurry, 0.005—0.6% by weight of a cement flocculant, based on the amount of cement, and the step of sheet-making with the flocculant-added cement slurry above-mentioned.

A further object is a method of the kind disclosed above, which is characterized by

the step of foming a cement slurry devoid of absestos fibers prepared by mixing a mixture comprising a total amount of 0.5—3.0% by weight of glass fibers and polyvinyl alcohol fibers, pulp added in an amount 2—2.5 times the amount of the aforementioned glass fiber and polyvinyl alcohol fiber, and the balance cement, with water,

the step of adding, to this cement slurry, 0.005—0.6% by weight of a cement flocculant, based on the amount of cement, and the step of sheet-making with the flocculant-added cement slurry above-mentioned.

According to a preferred embodiment of the present method the addition of the cement flocculant is made in the midway as the slurry, after being stirred, is fed from the chest to the vat.

Subject matter of the present application further on are the fiber-reinforced cement panels obtained according to this method using an aqueous material slurry obtained from a mixture consisting of 0.5 to 3.0% by weight of glass fibers, pulp in an amount of 2—2.5 times the amount of glass fibers, the balance cement, added with 0.005—0.6% by weight of a cement flocculant based on the amount of cement or by using an aqueous material slurry obtained from a mixture consisting of 0.5—3.0% by weight of glass fibers and polyvinyl alcohol fibers, pulp in an amount of 2—2.5 times the total amount of the aforementioned glass fibers and polyvinyl alcohol fibers, the balance cement, added with 0.005—0.6% by weight of a cement flocculant based on the amount of cement.

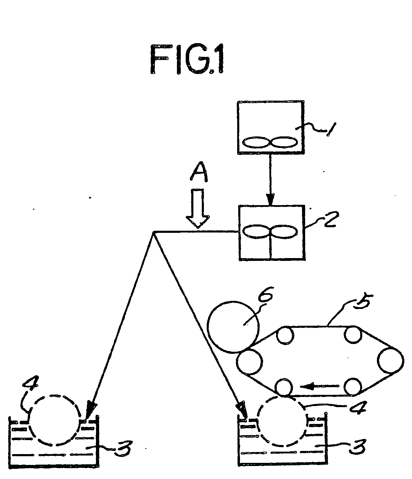

Figure 1 presents an explanatory diagram of a Hatschek model sheet-making system employed for exercising the process of this invention, showing the position for making the addition of the cement flocculant by an arrow A. According to the Hatschek sheet-making

process of this invention, a mixed material of 0.5—3.0% by weight of glass fibers and pulp in an amount of 2—2.5 times the amount of glass fiber, the balance cement, is charged into the pulper (1), and formed into a cement slurry through the chest (2). Then, in the midway, as indicated by the arrow A, as this cement slurry is transferred from the chest (2) to the vats (3), 0.005—0,6% by weight, preferably 0.01—0.06% by weight, of the cement flocculant, on the basis of the amount of cement, is continuously added. The slurry in the vat (3) is taken in a sheet form on the sheet-making cylinder (4) as well-known, and this sheet goes through the felt belt (5), and is taken up on the making roll (6). As it is taken up on the making roll (6) to the predetermined thickness, the taken-up sheet is cut, and stripped off the making roll (6). Then, it is extended, passed through the press, and cured, yielding a set cement panel. For the mixed material of the cement slurry, the total amount of glass fibers and polyvinyl alcohol fibers running up to 0.5—3.0% by weight, and the amount of pulp 2—2.5 times the total amount of glass fibers and polyvinyl alcohol fibers, the balance cement, are used. The cement slurry prepared from this mixed material, to which 0.005—0.6% by weight of a cement flocculant, based on the amount of cement, is added at the midpoint between the chest and the vat, is made into a sheet. In that way, a glass-fiber-reinforced cement panel containing polyvinyl alcohol fibers can be manufactured. The glass fibers confer the bending strength to the panel. An addition of glass fibers in the range of 0.5—3.0% by weight enables achieving a bending strength equivalent to that of the conventional asbestos-fiber-reinforced cement panels, being 150—300 kg/cm² ($1.47\times10^4$—$2.94\times10^4$ kPa).

For the glass fibers employed in the process of this invention, strands formed by collecting and setting monofilaments by use of a water soluble collector-setter and, then, chopped, are used. The chopped strand as a length of 3—19 mm.

The longer the glass fibers, the better effect may be achieved on improving the bending strength of panels, 3 mm or less being disadvantageous from panel bending strength standpoint. Longer glass fibers, however, present the difficulty of being homogenously dispersed, and it becomes hard to cut the taken-up sheet which has been taken in a sheet form on the making roll. The compromise length of the glass fibers may be limited to 19 mm. The polyvinyl alcohol fibers provide the panel with improved shock resistance. Its preferred amount of addition should be less than 1/3 times that of the glass fibers.

The polyvinyl alcohol fibers employed in the process of this invention have a higher than 9 g/dr ($1.03\times10^8$ kPa) tensile strength, 5—7% elongation, and 15—25 dr (5,64—9,4 μm) fiber diameter; such fibers are commercially available including Vinylon Fiber (trade name for a polyvinyl alcohol fiber manufactured by Kuraray Company, Product No. VPM 1502). The length of the polyvinyl alcohol fibers is nearly equal to that of the aforementioned glass fibers.

Pulp contributes to the improvement in the dispersion of the glass fibers and the polyvinyl alcohol fibers and in the cement solids capturing capacity. With regard to the amount of pulp added, pulp has no effect on improving the dispersion of glass fibers and polyvinyl alcohol fibers, when the amount is less than twice the amount of glass fibers or the total amount of glass fibers and polyvinyl alcohol fibers, if the polyvinyl alcohol fibers are mixed in, and it detracts from the strength and the resistance to moisture absorption of the panels, when its amount exceeds 2.5 times.

The cement flocculant provides an effective means for improving the sheet-making property of cement. But if its addition is less than 0.005%, both the aforementioned prevention of settling and separation of the glass fibers and the polyvinyl alcohol fibers and ensuring higher than 70% sheet-making efficiency of cement solids can not adequately be attained, and if it is more than 0.6%, the bounding strength of the cement matrix after being formed into a panel is reduced, and consequently, reduction in the panels strength is brought about.

For the cement flocculants for the process of this invention either the anionics or the cationics are usable, but those of strong anionic type having molecular weights of $10^6$—$10^7$ are most effective.

Of the flocculants of strong anionic type, by aid of which the cement particles are supposed to be flocculated due principally to the bridge forming and adsorbing effects, those having larger molecular weights are believed to be advantageous. Particularly desirable for use are polyacrylamides. Such polyacrylamides employed in the process of this invention have molecular weights ranging from 3—13 million. Polyacrylamides of this invention are polyacrylamides on which Na substitution is made as represented by the following formula:

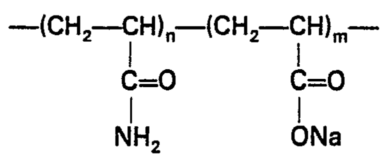

Those with m/m+n (degree of anionization) found in the range of 0.03—0.2 have been confirmed to give high effect of flocculation.

The above-mentioned products of strong anionic flocculants commercially available include Flocculant EXP No. 4 manufactured by Modern Chemical Industry Co., Ltd. (Kindai Kagaku Kogyo K.K.), Diaflock AP-335, Diaflock AP-825, and Sumiflock FA-50 (trade marks).

The flocculation by the aid of a cationic

flocculant is believed to result from the electrical bonding of the cations of the flocculant and the anions of the cement particles. Commercially available products representing intermediately, cationic flocculants include Diaflock KP-156A, and commercially available weakly cationic flocculants Diaflock KP-102 (trade marks).

In exercising the process of this invention, cement panels were manufactured with the amount of pulp used varied in the range from 0—7.0% by weight, the amount of glass fibers from 0.5—3.0% by weight, and the amount of the flocculant added from 0.0002—0.06% by weight. The results of the measurements of the bending strength, flexure (80 cm span) and the Charpy impact resistance of each panel are shown in Table 1.

Referring, now, to Table 1, in the Experiment Nos. 9—16, and 25—32, glass fibers (chopped strands of glass 6 mm long formed by collecting, and setting by the aid of a water soluble collector-setter, 300 monofilaments 13 $\mu$m) in fiber diameter), pulp and cement (Portland cement as specified by JIS-R-5210) were mixed with 5,000 kg of water in a pulper (capacity 7 $m^3$, rotating of stirring paddle 700 rpm) for 3 minutes. This mixture was transferred to the chest. Then, while continuously feeding the slurry in the chest into the vats, a strongly anionic flocculant (EXP No. 4 manufactured by Modern Chemical Industry Co., Ltd.) was continuously added to the slurry in the predetermined ratio thereto at the midpoint between the chest and the vats.

The slurry in the vat was taken in a sheet form on the sheet-making cylinder (at 30 m/min circumferential rotational speed) formed of a 60 mesh (250 $\mu$m) round wire-netting. This sheet thus produced was fed to the making roll through a felt shape belt, and as the sheet was taken upon this roll to 5 mm thickness, the taken-up sheet was cut, and stripped off the making roll.

The stock board stripped off the making roll was extended to a flat plate state. This board was, then, pressed for 10 minutes at a surface pressure of 80 kg/cm$^2$ (0.784x10$^4$ kPa) and for the following seven days, it was cured by leaving it outdoors.

In the Experiment Nos. 33—34, as the slurry material, 2.5% by weight of glass fibers and 0.5% by weight of Vinylon (trade name for a polyvinyl alcohol fiber, VPM 1502, manufactured by Kuraray Co., Ltd.; tensile strength 10 g/dr (1.14x10$^8$ kPa), fiber diameter 20 dr (7.52 $\mu$m) and fiber length 6 mm) were utilized. Other conditions were the same as in Experiments Nos. 25—32.

Experiments Nos. 1—8 and 17—24 are controls in which no inclusion of pulp was made, other conditions being identical with those in Experiment Nos. 9—16 and 25—32.

TABLE 1

| Experiment No. | Amount of flocculant (% by weight) | Glass fibers (% by weight) | Pulp (% by weight) | Bending strength x10$^4$ (kPa) | Flexure (mm) | Charpy impact resistance (kg.cm/cm$^2$) |
|---|---|---|---|---|---|---|
| 1 | 0.0002 | 0.5 | 0 | 1.58 | 6.0 | 2.80 |
| 2 | 0.0006 | 0.5 | 0 | 1.59 | 5.4 | 2.83 |
| 3 | 0.001 | 0.5 | 0 | | 5.8 | 2.93 |
| 4 | 0.003 | 0.5 | 0 | 1.59 | 5.4 | 2.86 |
| 5 | 0.006 | 0.5 | 0 | 1.56 | 5.6 | 2.76 |
| 6 | 0.01 | 0.5 | 0 | 1.57 | 5.5 | 2.80 |
| 7 | 0.03 | 0.5 | 0 | 1.55 | 5.5 | 2.96 |
| 8 | 0.06 | 0.5 | 0 | 1.51 | 5.5 | 2.74 |
| 9 | 0.0002 | 0.5 | 1.2 | 1.76 | 12.0 | 3.10 |
| 10 | 0.0006 | 0.5 | 1.2 | 1.77 | 11.4 | 3.14 |
| 11 | 0.001 | 0.5 | 1.2 | 1.79 | 11.8 | 3.10 |
| 12 | 0.003 | 0.5 | 1.2 | 1.78 | 12.0 | 3.02 |
| 13 | 0.006 | 0.5 | 1.2 | 1.76 | 12.0 | 3.10 |
| 14 | 0.01 | 0.5 | 1.2 | 1.72 | 11.8 | 3.17 |
| 15 | 0.03 | 0.5 | 1.2 | 1.74 | 11.7 | 3.13 |
| 16 | 0.06 | 0.5 | 1.2 | 1.68 | 11.9 | 3.09 |

TABLE 1 (contd.)

| Experiment No. | Amount of flocculant (% by weight) | Glass fibers (% by weight) | Pulp (% by weight) | Bending strength $\times 10^4$ (kPa) | Flexure (mm) | Charpy impact resistance (kg.cm/cm$^2$) |
|---|---|---|---|---|---|---|
| 17 | 0.0002 | 3.0 | 0 | 2.45 | 31.0 | 6.4 |
| 18 | 0.0006 | 3.0 | 0 | 2.39 | 32.4 | 6.5 |
| 19 | 0.001 | 3.0 | 0 | 2.39 | 30.4 | 6.3 |
| 20 | 0.003 | 3.0 | 0 | 2.46 | 31.8 | 6.5 |
| 21 | 0.006 | 3.0 | 0 | 2.41 | 30.7 | 6.4 |
| 22 | 0.01 | 3.0 | 0 | 2.44 | 29.8 | 6.2 |
| 23 | 0.03 | 3.0 | 0 | 2.46 | 26.1 | 6.3 |
| 24 | 0.06 | 3.0 | 0 | 2.45 | 28.2 | 6.4 |
| 25 | 0.0002 | 3.0 | 7.0 | 3.14 | 40.2 | 8.2 |
| 26 | 0.0006 | 3.0 | 7.0 | 3.15 | 41.0 | 8.0 |
| 27 | 0.001 | 3.0 | 7.0 | 3.08 | 38.0 | 8.1 |
| 28 | 0.003 | 3.0 | 7.0 | 3.08 | 37.0 | 8.2 |
| 29 | 0.006 | 3.0 | 7.0 | 3.12 | 38.6 | 7.9 |
| 30 | 0.01 | 3.0 | 7.0 | 3.10 | 39.4 | 7.9 |
| 31 | 0.03 | 3.0 | 7.0 | 3.08 | 39.2 | 8.3 |
| 32 | 0.06 | 3.0 | 7.0 | | 41.0 | 8.2 |
| 33 | 0.0002 | Glass fiber 2.5 Polyvinyl-alcohol fiber 0.5 | 7.0 | 3.04 | 42.2 | 9.8 |
| 34 | 0.0006 | ditto | 7.0 | 3.02 | 40.2 | 9.3 |
| 35 | 0.001 | ditto | 7.0 | 3.05 | 41.8 | 9.6 |
| 36 | 0.003 | ditto | 7.0 | 3.06 | 42.4 | 9.4 |
| 37 | 0.006 | ditto | 7.0 | 3.06 | 41.4 | 8.9 |
| 38 | 0.01 | ditto | 7.0 | 3.02 | 42.0 | 9.2 |
| 39 | 0.03 | ditto | 7.0 | 3.01 | 41.8 | 9.5 |
| 40 | 0.06 | ditto | 7.0 | 3.01 | 41.1 | 9.4 |

The above-listed experiments showed evident results that the glass-fiber-reinforced cement panels manufactured by the process of this invention all had higher mechanical strengths, as compared with the controls containing no pulp, and that the improvement in the dispersion of glass fiber realized by the addition of pulp and flocculant was remarkable.

**Claims**

1. A process for manufacturing a fiber-reinforced cement panel by the Hatschek sheet-making process comprising the steps of forming a cement slurry by mixing cement, reinforcement fibers and water in a pulper, transferring the slurry to a chest, further continuously feeding the slurry from the chest to a vat, making a sheet from the cement slurry by a sheet-making cylinder in the vat, taking up the sheet on a making roll and making the panel by cutting and curing the sheet which is stripped off the making roll characterized by the step of forming a cement slurry by mixing a mixture comprising 0.5—3.0% by weight of glass fibers, pulp added in an amount 2—2.5 times the amount of the aforementioned glass fibers, and the balance cement, with water, the step of adding, to this cement slurry 0.005—0.6% by weight of a cement flocculant, based on the amount of cement, and the step of sheet-making with the flocculant-added cement slurry above-mentioned.

2. The process according to Claim 1, characterized in that the addition of the cement flocculant is made in the midway as the slurry, after being stirred, is fed from the chest to the vat.

3. The process according to Claim 2, characterized in that the flocculant is polyacrylamide.

4. A process for manufacturing a fiber-reinforced cement panel by the Hatschek sheet-making process comprising the steps of forming a cement slurry by mixing cement, reinforcement fibers and water in a pulper, transferring the slurry to a chest, further continuously feeding the slurry in the chest to a vat, making a sheet from the cement slurry by a

sheet-making cylinder in the vat, taking up the sheet on a making roll and making the panel by cutting and curing the sheet which is stripped off the making roll characterized by the step of forming a cement slurry devoid of asbestos fibers prepared by mixing a mixture comprising a total amount of 0.5—3.0% by weight of glass fibers and polyvinyl alcohol fibers, pulp added in an amount 2—2.5 times the amount of the aforementioned glass fiber and polyvinyl alcohol fiber, and the balance cement, with water, the step of adding, to this cement slurry, 0.005—0.6% by weight of a cement flocculant, based on the amount of cement, and the step of sheet-making with the flocculant-added cement slurry above mentioned.

5. The process according to Claim 4, characterized in that the amount of the polyvinyl alcohol fibers is less than 1/3 times the amount of the glass fibers.

6. The process according to Claim 4, characterized in that the glass fibers are produced by chopping the strand formed by collecting and setting monofilaments by the aid of a water soluble collector setter, the chopped strand having a length of 3—19 mm.

7. The process according to Claim 1 or 4, characterized in that the addition of the flocculant is made in the midway as the cement slurry, after being stirred in the pulper, is being fed from the chest to the vat.

8. The process according to Claim 4, characterized in that the flocculant is polyacrylamide.

9. The process according to claim 8, characterized in that as the polyacrylamide, a Na substituted polyacrylamide having a molecular weight of 3—13 million and represented by the undermentioned formula is employed;

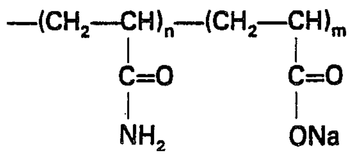

where m and n are integers, holding a relation of m/m+n=0.03—0.2.

10. A fiber-reinforced cement panel formed by sheet-making using an aqueous material slurry obtained from a mixture consisting of 0.5—3.0% by weight of glass fibers, pulp in an amount 2—2.5 times the amount of glass fibers, the balance cement added with 0.005—0.6% by weight of a cement flocculant based on the amount of cement.

11. A fiber-reinforced cement panel formed by way of sheet-making using an aqueous material slurry obtained from a mixture consisting of 0.5—3.0% by weight of glass fibers and polyvinyl alcohol fibers, pulp in an amount 2—2.5 times the total amount of the aforementioned glass fibers and polyvinyl alcohol fibers, the balance cement, added with 0.005—0.6% by weight of a cement flocculant based on the amount of cement.

**Patentansprüche**

1. Verfahren zur Herstellung einer faserverstärkten Zementplatte nach dem Hatschek-Bahnherstellungsverfahren, umfassend die Schritte der Ausbildung einer Zementaufschlämmung durch Vermischen von Zement, verstärkenden Fasern und Wasser in einem Pulper, Überführen der Aufschlämmung in einen kistenartigen Bahälter, weitere kontinuierliche Überführung der Aufschlämmung von dem kistenartigen Behälter in einen Bottich, Herstellung einer Bahn aus der Zementaufschlämmung mit Hilfe eines Bahnherstellungszylinders in dem Bottich, Aufnehmen der Bahn auf eine Herstellungswalze und Ausbilden der Platte durch Schneiden und Härten der von der Herstellungswalze abgezogenen Bahn, gekennzeichnet, durch die Stufe der Bildung einer Zementaufschlämmung durch Vermischen einer Mischung aus 0,5 bis 3,0 Gew.-% Glasfasern, Pulpe in einer Menge, die dem 2- bis 2,5-fachen der Menge der erwähnten Glasfasern entspricht und Zement als Rest, mit Wasser, die Stufe der Zugabe von 0,005 bis 0,6 Gew.-% eines Zementausflockungsmittels, bezogen auf die Menge des Zements, zu dieser Zementaufschlämmung und die Stufe der Bahnherstellung mit der erwähnten, mit dem Ausflockungsmittel versetzten Zementaufschlämmung.

2. Verfahren nach Anspruch 1, dadurch gekennzeichnet, daß die Zugabe des Zementausflockungsmittels zwischenzeitlich erfolgt, währenddem die Aufschlämmung nach dem Rühren von dem kistenartigen Behälter zu dem Bottich überführt wird.

3. Verfahren nach Anspruch 2, dadurch gekennzeichnet, daß man Ausflockungsmittel Polyacrylamid verwendet.

4. Verfahren zur Herstellung einer faserverstärkten Zementplatte nach dem Hatschek-Bahnherstellungsverfahren, umfassend die Schritte der Ausbildung einer Zementaufschlämmung durch Vermischen von Zement, verstarkenden Fasern und Wasser in einem Pulper, Überführen der Aufschlämmung in einen kistenartigen Behälter, weitere kontinuierliche Überführung der Aufschlämmung von dem kistenartigen Behälter in einen Bottich, Herstellung einer Bahn aus der Zementaufschlämmung mit Hilfe eines Bahnherstellungszylinders in dem Bottich, Aufnehmen der Bahn auf eine Herstellungswalze und Ausbilden der Platte durch Schneiden und Härten der von der Herstellungswalze abgezogenen Bahn, gekennzeichnet, durch die Stufe der Bildung einer von Asbestfasern freien Zementaufschlämmung durch Vermischen einer Mischung, die eine Gesamtmenge von 0,5 bis 3,0 Gew.-% Glasfasern und Polyvinylalkoholfasern, zugesetzte Pulpe in einer Menge, die dem 2- bis 2,5-fachen der Menge der genannten Glasfasern der Polyvinylalkoholfasern entspricht, und Zement als Rest enthält, mit Wasser, die Stufe der Zugabe

von 0,005 bis 0,6 Gew.-% eines Zementausflockungsmittels, bezogen auf die Menge des Zements, zu dieser Zementaufschlämmung und die Stufe der Bahnherstellung mit der erwähnten, mit dem Aufflockungsmittel versetzten Zementaufschlämmung.

5. Verfahren nach Anspruch 4, dadurch gekennzeichnet, daß die Menge der Polyvinylalkoholfasern weniger als ein Drittel der Menge der Glasfasern beträgt.

6. Verfahren nach Anspruch 4, dadurch gekennzeichnet, daß die Glasfasern durch Zerschneiden eines durch Sammeln und Absetzen von Monofilamenten mit Hilfe eines wasserlöslichen Sammel-Ausfällungs-Mittels erhaltenen Stranges gebildet worden sind, wobei der zerschnittene Strang eine Länge von 3 bis 19 mm aufweist.

7. Verfahren nach den Ansprüchen 1 oder 4, dadurch gekennzeichnet, daß die Zugabe des Ausflockungsmittels zu der Zementaufschlämmung zwischenzeitlich erfolgt, nachdem dieser in dem Pulper gerührt worden ist und von dem kistenartigen Behälter zu dem Bottich überführt wird.

8. Verfahren nach Anspruch 4, dadurch gekennzeichnet, daß man als Ausflockungsmittel Polyacrylamid verwendet.

9. Verfahren nach Anspruch 8, dadurch gekennzeichnet, daß als Polyacrylamid ein Nasubstituiertes Polyacrylamid mit einem Molekulargewicht von 3 bis 13 Millionen der nachfolgend angegebenen allgemeinen Formel verwendet wird

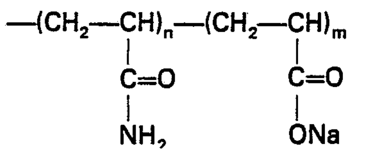

in der m und n ganze Zahlen bedeuten, die die Beziehung m/m+n=0,03—0,2 erfüllen.

10. Faserverstärkte Zementplatte erhalten durch Ausbilden einer Bahn unter Verwendung einer wäßrigen Materialaufschlämmung aus einer Mischung, die aus 0,5 bis 3,0 Gew.-% Glasfasern, Pulpe in einer Menge, die dem 2- bis 2,5-fachen der Menge der Glasfasern entspricht und zum Rest aus Zement besteht, die mit 0,005 bis 0,6 Gew.-% eines Zementausflockungsmittels, bezogen auf die Menge des Zements, versetzt worden ist.

11. Faserverstärkte Zementplatte, erhalten durch Ausbilden einer Bahn unter Verwendung einer wäßrigen Materialaufschlämmung, die erhalten worden ist aus einer Mischung, die aus 0,5 bis 3,0 Gew.-% Glasfasern und Polyvinylalkoholfasern, Pulpe in einer Menge, die dem 2- bis 2,5-fachen der Gesamtmenge der genannten Glasfasern und Polyvinylfasern entspricht, und aus Zement als Rest besteht, und die mit 0,005 bis 0,6 Gew.-% eines Zementausflockungsmittels, bezogen auf die Menge des Zements versetzt worden ist.

**Revendications**

1. Un procédé pour fabriquer un panneau en ciment renforcé par des fibres à l'aide du procédé de fabrication de feuilles Hatschek comprenant les phases consistant à former un coulus de ciment en mélangeant du ciment, des fibres de renforcement et de l'eau dans un triturateur, à transférer le coulis dans un cuvier, à acheminer en outre de façon continue le coulis du cuvier jusqu'à une cuve, à fabriquer une feuille à partir du coulis de ciment à l'aide d'un cylindre de fabrication de feuilles se trouvant dans la cuve, à cueillir la feuille sur un rouleau de fabrication et à fabriquer le panneau en découpant et en faisant durcir la feuille que l'on décolle du rouleau de fabrication, caractérisé par la phase de formation d'un coulis de ciment en malaxant avec de l'eau un mélange comprenant 0,5—3,0% en poids de fibres de verre, une pâte ajoutée en une quantité de 2—2,5 fois la quantité des fibres de verre précitées, et le ciment comme complément, la phase d'addition, à ce coulis de ciment, de 0,005—0,6% en poids d'un agent de floculation de ciment basé sur la quantité de ciment, et la phase de fabrication de feuille avec le coulis de ciment mentionné ci-dessus additionné d'agent de floculation.

2. Le procédé suivant la revendication 1, caractérisé par le fait que l'addition de l'agent de floculation de ciment est effectué à mi-parcours pendant que le coulis, après avoir été agité, est acheminé du cuvier jusqu'à la cuve.

3. Le procédé suivant la revendication 2, caractérisé par le fait que l'agent de floculation est un polyacrylamide.

4. Un procédé pour fabriquer un panneau de ciment renforcé par des fibres à l'aide du procédé de fabrication de feuilles Hatschek comprenant les phases consistant à former un coulis de ciment par mélange de ciment, de fibres de renforcement et d'eau dans un triturateur, à transférer le coulis dans un cuvier, à acheminer en outre de façon continue le coulis se trouvant dans le cuvier jusqu'à une cuve, à fabriquer une feuille à partir du coulis de ciment à l'aide d'un cylindre de fabrication de feuilles se trouvant dans la cuve, à cueillir le feuille sur un rouleau de fabrication et à fabriquer le panneau en découpant et en faisant durcir la feuille que l'on décolle du rouleau de fabrication, caractérisé par: la phase de formation d'un coulis de ciment exempt de fibres d'amiante préparé par malaxage avec de l'eau d'un mélange comprenant une quantité totale de 0,5—3,0% en poids de fibres de verre et de fibres d'alcool polyvinylique, une pâte ajoutée en une quantité de 2—2,5 fois la quantité des fibres de verre et des fibres d'alcool polyvinylique précitées, et le ciment comme complément, la phase d'addition, à ce coulis de ciment, de 0,005—0,6% en poids d'un agent de floculation de ciment basé sur la quantité de ciment, et la phase de fabrication de feuille avec

le coulis de ciment mentionné ci-dessous additionné d'agent de floculation.

5. Le procédé suivant la revendication 3, caractérisé par le fait que la quantité de fibres d'alcool polyvinylique est inférieur à 1/3 fois la quantité de fibres de verre.

6. Le procédé suivant la revendication 4, caractérisé par le fait que l'on produit les fibres de verre en hachant le brin formé par agglomération et prise de monofilaments à l'aide d'un agent d'agglomération et de prise soluble dans l'eau, le brin haché ayant une longueur de 3—19 mm.

7. Le procédé selon les revendications 1 ou 4, caractérisé par le fait que l'addition de l'agent de floculation est effectuée à mi-parcours pendant que le coulis de ciment, après avoir été agité dans le triturateur, est acheminé du cuvier jusqu'à la cuve.

8. Le procédé selon la revendication 4, caractérisé par le fait que l'agent de floculation est un polyacrylamide.

9. Le procédé suivant la revendication 8, caractérisé par le fait que, comme polyacrylamide, on utilise un polyacrylamide substitué par Na ayant un poids moléculaire de 3—13 millions et représenté par la formule mentionnée ci-dessous:

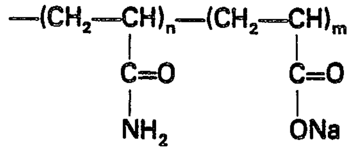

où m et n sont des nombres entiers, présentant une relation de m/m+n=0,003—0,2.

10. Panneau en ciment renforcé par des fibres formé par fabrication de feuille en utilisant un coulis de matière aqueuse obtenu à partir d'un mélange consistant en 0,5—3,0% en poids de fibres de verre, une pâte en une quantité de 2—2,5 fois la quantité de fibres de verre, le ciment comme complément, additionné de 0,005—0,6% en poids d'un agent de floculation de ciment basé sur la quantité de ciment.

11. Panneau en ciment renforcé par des fibres formé par fabrication de feuille en utilisant un coulis de matière aqueuse obtenu à partir d'un mélange consistant en 0,5—3.0% en poids de fibres de verre et de fibres d'alcool polyvinylique, une pâte en une quantité de 2—2,5 fois la quantité totale des fibres de verre et des fibres d'alcool polyvinylique précitées, le ciment comme complément, additionné de 0,005—0,6% en poids d'un agent de floculation de ciment basé sur la quantité de ciment.

FIG.1